# EUROPEAN PATENT APPLICATION

(11) **EP 4 707 429 A1**
(43) Date of publication of application: **11.03.2026**
(21) Application number: 24830338.0
(22) Date of filing: 27.05.2024
(51) Int. Cl.: C25B 1/04, C25B 15/08, C25B 15/02, C25B 15/023, C25B 9/00, C25B 9/60

(54) **WATER ELECTROLYSIS HYDROGEN PRODUCTION SYSTEM, AND METHOD AND APPARATUS FOR CONTROLLING GAS PURITY IN WATER ELECTROLYSIS HYDROGEN PRODUCTION PROCESS**

(30) Priority: 30.06.2023 CN 202310796877; 30.06.2023 CN 202321696680 U; 11.07.2023 CN 202321815572 U
(71) Applicant: XI'AN LONGI HYDROGEN TECHNOLOGY CO., LTD., Shaanxi 710075 (CN)
(72) Inventor: JIANG, Chao, Xi' an, Shaanxi 710075 (CN); LONG, Guangzheng, Xi' an, Shaanxi 710075 (CN); JIAO, Qingsheng, Xi' an, Shaanxi 710075 (CN); ZHENG, Lianhuan, Xi' an, Shaanxi 710075 (CN); WANG, Hui, Xi' an, Shaanxi 710075 (CN); ZHOU, Changlong, Xi' an, Shaanxi 710075 (CN)
(74) Representative: Pfenning, Meinig & Partner mbB
(86) International application number: PCT/CN2024/095592
(87) International publication number: WO 2025/001690

(57) **Abstract**

The present application relates to the field of electrolysis hydrogen production technologies, and discloses a water electrolysis hydrogen production system and a method and an apparatus for controlling gas purity in a water electrolysis hydrogen production process, to implement separate control of flow rates at a hydrogen-side inlet and an oxygen-side inlet of an electrolyzer. The water electrolysis hydrogen production system includes an electrolyzer, a hydrogen gas-liquid separation unit, and an oxygen gas-liquid separation unit. A liquid outlet of the hydrogen gas-liquid separation unit is connected to a first pipeline, a liquid outlet of the oxygen gas-liquid separation unit is connected to a second pipeline, the first pipeline and the second pipeline converge and connect to one end of an alkali electrolyte return main pipeline, and the other end of the alkali electrolyte return main pipeline is connected to an oxygen-side pipeline and a hydrogen-side pipeline. The hydrogen-side pipeline is connected to a hydrogen-side alkali electrolyte flow channel inlet of the electrolyzer, and the oxygen-side pipeline is connected to an oxygen-side alkali electrolyte flow channel inlet of the electrolyzer. The hydrogen-side pipeline and the oxygen-side pipeline are respectively provided with a flow rate detection assembly and a flow rate regulation assembly. A hydrogen-side gas outlet of the electrolyzer is connected to the hydrogen gas-liquid separation unit, and an oxygen-side gas outlet is connected to the oxygen gas-liquid separation unit.

## Description

### CROSS-REFERENCE TO RELATED APPLICATIONS

The present application claims priority to Chinese Patent Application No. 202310796877.5 filed with the China National Intellectual Property Administration on June 30, 2023 and entitled "APPARATUS, SYSTEM, AND METHOD FOR CONTROLLING GAS PURITY IN WATER ELECTROLYSIS HYDROGEN PRODUCTION SYSTEM", Chinese Patent Application No. 202321696680.6 filed with the China National Intellectual Property Administration on June 30, 2023 and entitled "ALKALINE WATER ELECTROLYSIS HYDROGEN PRODUCTION SYSTEM", and Chinese Patent Application No. 202321815572.6 filed with the China National Intellectual Property Administration on July 11, 2023 and entitled "ELECTROLYZER", which are incorporated herein by reference in their entireties.

### TECHNICAL FIELD

The present application relates to the field of electrolysis hydrogen production technologies, and in particular, to a water electrolysis hydrogen production system and a method and an apparatus for controlling gas purity in a water electrolysis hydrogen production process.

### BACKGROUND

Currently, a filter-press type bipolar electrolyzer is usually used in the field of alkaline water electrolysis hydrogen production. Such an electrolyzer includes a plurality of stacked electrode frames and bipolar plates disposed in the electrode frames. The electrode frames and the bipolar plates form electrode frame assemblies. The electrode frame assemblies form in the electrolyzer a plurality of electrolytic chambers that are configured to accommodate an electrolyte and in which electrolysis reactions occur. Every two electrode frames are separated by a separator, and the electrolytic chambers are divided into cathode cells and anode cells. The reduction reaction of hydrogen ions occur to generate hydrogen in the cathode cells, and the oxidation reaction of hydroxide ions occur to generate oxygen in the anode cells.

In a conventional alkaline water electrolysis hydrogen production system, because input power is stable, the hydrogen production system has stable pressure and a stable electrolyte flow rate, and obtained gas purity is also stable. However, in a new-energy alkaline water electrolysis hydrogen production system, for example, a wind energy- or solar energy-coupled hydrogen production system, because wind energy, solar energy, and other renewable energy sources have characteristics such as randomness, fluctuations, and uncertainty, when the load is low, the generation rate of oxygen is lower than the crossover rate of hydrogen, and as a result hydrogen content in oxygen increases. In addition, due to the high permeability of hydrogen, hydrogen permeates to the oxygen side through a separator, leading to the phenomenon of hydrogen in oxygen. The hydrogen content in oxygen exceeding 4% poses a risk of explosion.

### SUMMARY

An objective of the present application is to provide a water electrolysis hydrogen production system and a method and an apparatus for controlling gas purity in a water electrolysis hydrogen production process.

According to a first aspect, the present application provides a water electrolysis hydrogen production system. The system includes an electrolyzer, a hydrogen gas-liquid separation unit, and an oxygen gas-liquid separation unit, where
a liquid outlet of the hydrogen gas-liquid separation unit is connected to a first pipeline, a liquid outlet of the oxygen gas-liquid separation unit is connected to a second pipeline, the first pipeline and the second pipeline converge and connect to one end of an alkali electrolyte return main pipeline, and the other end of the alkali electrolyte return main pipeline is connected to an oxygen-side pipeline and a hydrogen-side pipeline that are connected in parallel; the hydrogen-side pipeline is connected to a hydrogen-side flow channel inlet of the electrolyzer, and the oxygen-side pipeline is connected to an oxygen-side flow channel inlet of the electrolyzer; the hydrogen-side pipeline is provided with a first flow rate detection assembly and a first flow rate regulation assembly; and the oxygen-side pipeline is provided with a second flow rate detection assembly and a second flow rate regulation assembly; and
a hydrogen-side gas outlet of the electrolyzer is connected to the hydrogen gas-liquid separation unit, and an oxygen-side gas outlet of the electrolyzer is connected to the oxygen gas-liquid separation unit.

In some embodiments, the system further includes a control unit, the first flow rate detection assembly and the second flow rate detection assembly are respectively electrically coupled to the control unit, and the first flow rate regulation assembly and the second flow rate regulation assembly are respectively electrically coupled to the control unit.

In some embodiments, the first flow rate regulation assembly includes a first variable frequency pump, and the second flow rate regulation assembly includes a second variable frequency pump.

In some embodiments, an alkali electrolyte circulating pump is disposed on the alkali electrolyte return main pipeline, the first flow rate regulation assembly includes a first regulating valve, and the second flow rate regulation assembly includes a second regulating valve.

In some embodiments, the system further includes an alkali electrolyte cooler, and the alkali electrolyte cooler is disposed on the alkali electrolyte return main pipeline.

In some embodiments, the hydrogen-side pipeline is further provided with a first control valve, and the first control valve is configured to control flow and shutoff of the hydrogen-side pipeline, and control unidirectional flow of liquid in the hydrogen-side pipeline; and the oxygen-side pipeline is further provided with a second control valve, and the second control valve is configured to control flow and shutoff of the oxygen-side pipeline, and control unidirectional flow of liquid in the oxygen-side pipeline.

In some embodiments, the electrolyzer includes an anode plate, a first cathode plate, and a second cathode plate, the anode plate is located in the middle of the electrolyzer, and the first cathode plate and the second cathode plate are respectively located at two ends of the electrolyzer.

In some embodiments, the system includes at least two electrolyzers, where
the hydrogen-side gas outlet of each electrolyzer is connected to a feed inlet of the hydrogen gas-liquid separation unit; and
the oxygen-side gas outlet of each electrolyzer is connected to a feed inlet of the oxygen gas-liquid separation unit.

In some embodiments, the system further includes:
a gas purity detection assembly, where the gas purity detection assembly is electrically coupled to the control unit, and is capable of detecting hydrogen content in oxygen and oxygen content in hydrogen prepared by the water electrolysis hydrogen production system.

In some embodiments, the electrolyzer includes:
a tank, where a plurality of electrolytic cells are provided in the tank, each of the electrolytic cells includes an anode region and a cathode region, a first electrode plate is provided in the tank, and a first cavity and a second cavity that are spaced apart are formed in the first electrode plate;
a first flow field structure, including a first electrolyte feed flow channel and a first electrolyte distribution channel that are provided in a wall of the tank, where the first electrolyte distribution channel is configured to communicate with the plurality of anode regions and communicate with the first electrolyte feed flow channel through the first cavity; and
a second flow field structure, including a second electrolyte feed flow channel and a second electrolyte distribution channel that are provided in the wall of the tank, where the second electrolyte distribution channel is configured to communicate with the plurality of cathode regions and communicate with the second electrolyte feed flow channel through the second cavity.

In some embodiments, the electrolyzer further includes a second electrode plate, the second electrode plate is symmetrically disposed on two sides of the first electrode plate in an extension direction of the tank and is spaced apart from the first electrode plate, and both a first inlet of the first electrolyte feed flow channel and a second inlet of the second electrolyte feed flow channel are provided on the second electrode plate.

In some embodiments, the electrolyzer further includes a second electrode plate, a plurality of first electrode plates are provided at equal intervals on a side of the second electrode plate in an extension direction of the tank, and both a first inlet of the first electrolyte feed flow channel and a second inlet of the second electrolyte feed flow channel are provided on the second electrode plate.

In some embodiments, a plurality of first flow field structures and a plurality of second flow field structures are provided.

In some embodiments, the plurality of first flow field structures and the plurality of second flow field structures are arranged alternately and at intervals in a circumferential direction of the tank.

In some embodiments, the first cavity and the second cavity have the same volume.

According to a second aspect, the present application further provides a method for controlling gas purity in a water electrolysis hydrogen production process, where the method includes:
acquiring hydrogen content in oxygen and oxygen content in hydrogen prepared by a hydrogen production system;
increasing an electrolyte flow rate at an oxygen-side flow channel inlet of an electrolyzer and/or decreasing an electrolyte flow rate at a hydrogen-side flow channel inlet of the electrolyzer when the hydrogen content in oxygen is greater than a first content value until the hydrogen content in oxygen is less than or equal to a first target value; and
increasing the electrolyte flow rate at the hydrogen-side flow channel inlet of the electrolyzer and/or decreasing the electrolyte flow rate at the oxygen-side flow channel inlet of the electrolyzer when the oxygen content in hydrogen is greater than a second content value until the oxygen content in hydrogen is less than or equal to a second target value.

In some embodiments, the increasing an electrolyte flow rate at an oxygen-side flow channel inlet of an electrolyzer and/or decreasing an electrolyte flow rate at a hydrogen-side flow channel inlet of the electrolyzer when the hydrogen content in oxygen is greater than a first content value until the hydrogen content in oxygen is less than or equal to a first target value is:
periodically increasing the electrolyte flow rate at the oxygen-side flow channel inlet of the electrolyzer to increase a first flow rate value and/or decreasing the electrolyte flow rate at the hydrogen-side flow channel inlet of the electrolyzer at intervals of a first time value to decrease a second flow rate value when the hydrogen content in oxygen is greater than the first content value until the hydrogen content in oxygen is less than or equal to the first target value; and/or
the increasing the electrolyte flow rate at the hydrogen-side flow channel inlet of the electrolyzer and/or decreasing the electrolyte flow rate at the oxygen-side flow channel inlet of the electrolyzer when the oxygen content in hydrogen is greater than a second content value until the oxygen content in hydrogen is less than or equal to a second target value is:
   periodically increasing the electrolyte flow rate at the hydrogen-side flow channel inlet of the electrolyzer to increase a third flow rate value and/or decreasing the electrolyte flow rate at the oxygen-side flow channel inlet of the electrolyzer at intervals of a second time value to decrease a fourth flow rate value when the oxygen content in hydrogen is greater than the second content value until the oxygen content in hydrogen is less than or equal to the second target value.

In some embodiments, the first content value is a volume fraction ranging from 0.5% to 1.5%; and/or
the first time value ranges from 0.5 hours to 10 hours, and ranges from 2 hours to 8 hours in some embodiments; and/or
the first flow rate value ranges from 0.5% to 1% of the electrolyte flow rate at the oxygen-side flow channel inlet before the current adjustment; and/or
the second flow rate value ranges from 0.5% to 1% of the electrolyte flow rate at the hydrogen-side flow channel inlet before the current adjustment; and/or
the first target value is a volume fraction ranging from 0.5% to 1.5%; and/or
the second content value is a volume fraction ranging from 0.5% to 1.5%; and/or
the second time value ranges from 0.5 hours to 10 hours, and ranges from 2 hours to 8 hours in some embodiments; and/or
the third flow rate value ranges from 0.5% to 1% of the electrolyte flow rate at the hydrogen-side flow channel inlet before the current adjustment; and/or
the fourth flow rate value ranges from 0.5% to 1% of the electrolyte flow rate at the oxygen-side flow channel inlet before the current adjustment; and/or
the second target value is a volume fraction ranging from 0.5% to 1.5%.

According to a third aspect, the present application further provides an apparatus for controlling gas purity in a water electrolysis hydrogen production system, including:
a controller unit, configured to determine a regulation value for an electrolyte flow rate at an oxygen-side flow channel inlet and an electrolyte flow rate at a hydrogen-side flow channel inlet of an electrolyzer based on hydrogen content in oxygen and oxygen content in hydrogen prepared by the water electrolysis hydrogen production system and the electrolyte flow rate at the oxygen-side flow channel inlet and the electrolyte flow rate at the hydrogen-side flow channel inlet of the electrolyzer;
a gas purity detection assembly, where the gas purity detection assembly is electrically coupled to the controller unit, and is configured to detect the hydrogen content in oxygen and the oxygen content in hydrogen prepared by the water electrolysis hydrogen production system;
a flow rate detection assembly, where the flow rate detection assembly is electrically coupled to the controller unit, and is configured to detect the electrolyte flow rate at the oxygen-side flow channel inlet and the electrolyte flow rate at the hydrogen-side flow channel inlet of the electrolyzer; and
a flow rate regulation assembly, where the flow rate regulation assembly is electrically coupled to the controller unit, and is configured to regulate the electrolyte flow rate at the oxygen-side flow channel inlet and the electrolyte flow rate at the hydrogen-side flow channel inlet of the electrolyzer.

The above description is only an overview of the technical solutions of the present application. For a clearer understanding of the technical measure of the present application and implementation according to the content of the specification, and to make the above and other objectives, features, and advantages of the present application clearer and more comprehensible, specific embodiments of the present application are described below.

### BRIEF DESCRIPTION OF THE DRAWINGS

To describe the technical solutions in the embodiments of the present application or the related art more clearly, the following briefly introduces the accompanying drawings required for describing the embodiments or the related art. Apparently, the accompanying drawings in the following description show some embodiments of the present application, and persons of ordinary skill in the art may still derive other drawings from these accompanying drawings without creative efforts. In the accompanying drawings:
FIG. 1 is a schematic diagram of a first implementation of a water electrolysis hydrogen production system according to an embodiment of the present application;
FIG. 2 is a schematic diagram of a second implementation of a water electrolysis hydrogen production system according to an embodiment of the present application;
FIG. 3 is a schematic diagram of a third implementation of a water electrolysis hydrogen production system according to an embodiment of the present application;
FIG. 4 is a schematic diagram of a fourth implementation of a water electrolysis hydrogen production system according to an embodiment of the present application;
FIG. 5 is a schematic structural diagram of an electrolyzer according to an embodiment of the present application;
FIG. 6 is a schematic structural diagram of a second electrode plate according to an embodiment of the present application;
FIG. 7 is a schematic structural diagram of a first electrode plate in a first embodiment according to an embodiment of the present application;
FIG. 8 is a schematic structural diagram of a first electrode plate in a second embodiment according to an embodiment of the present application;
FIG. 9 is a schematic structural diagram of a first electrode plate in a third embodiment according to an embodiment of the present application;
FIG. 10 is a schematic structural diagram of a first electrode plate in a fourth embodiment according to an embodiment of the present application;
FIG. 11 is a schematic structural diagram of a water electrolysis hydrogen production system in which an electrolyzer is provided with one oxygen-side flow channel inlet and one hydrogen-side flow channel inlet according to an embodiment of the present application;
FIG. 12 is a schematic structural diagram of a water electrolysis hydrogen production system in which an electrolyzer is provided with two oxygen-side flow channel inlets and two hydrogen-side flow channel inlets according to an embodiment of the present application;
FIG. 13 is a schematic structural diagram of another water electrolysis hydrogen production system in which an electrolyzer is provided with one oxygen-side flow channel inlet and one hydrogen-side flow channel inlet according to an embodiment of the present application;
FIG. 14 is a schematic structural diagram of another water electrolysis hydrogen production system in which an electrolyzer is provided with two oxygen-side flow channel inlets and two hydrogen-side flow channel inlets according to an embodiment of the present application;
FIG. 15 is a flowchart of a method for controlling gas purity according to an embodiment of the present application;
FIG. 16 is a flowchart of another method for controlling gas purity according to an embodiment of the present application; and
FIG. 17 is a schematic diagram of a computing and processing device according to an embodiment of the present application.

**Reference numerals:**

| | | | |
|---|---|---|---|
| 1- | electrolyzer | 2- | hydrogen gas-liquid separation unit |
| 3- | oxygen gas-liquid separation unit | 4- | alkali electrolyte cooler |
| 5- | control unit | 6- | first flow rate detection assembly |
| 7- | second flow rate detection assembly | 8- | first variable frequency pump |
| 9- | second variable frequency pump | 10- | circulating pump |
| 11- | first regulating valve | 12- | second regulating valve |
| 13- | hydrogen-side flow channel inlet | 14- | oxygen-side flow channel inlet |
| 15- | hydrogen-side gas outlet | 16- | oxygen-side gas outlet |
| 17- | first hydrogen-side gas outlet | 18- | first oxygen-side gas outlet |
| 19- | first hydrogen-side flow channel inlet | 20- | first oxygen-side flow channel inlet |
| 21- | second hydrogen-side gas outlet | 22- | second oxygen-side gas outlet |
| 23- | second hydrogen-side flow channel inlet | 24- | second oxygen-side flow channel inlet |
| | | | |
| 25- | first gas purity detection component | 26- | second gas purity detection component |
| 27- | oxygen outlet | 28- | hydrogen outlet |
| 29- | second valve | 30- | third valve |
| 101- | tank | 111- | first exhaust flow channel |
| 112- | second exhaust flow channel | 102- | first electrode plate |
| 121- | first cavity | 122- | second cavity |
| 103- | second electrode plate | 131- | first inlet |
| 132- | second inlet | 133- | first exhaust port |
| 134- | second exhaust port | 104- | first flow field structure |
| 141- | first electrolyte feed flow channel | 142- | first electrolyte distribution channel |
| 105- | second flow field structure | 151- | second electrolyte feed flow channel |
| 152- | second electrolyte distribution channel | | |
| | | | |

### DETAILED DESCRIPTION

To make the technical problems to be resolved in the present application, the technical solutions, and beneficial effects more comprehensible, the following further describes the present application in detail with reference to the accompanying drawings and embodiments. It should be understood that the specific embodiments described herein are merely used to explain the present application but are not intended to limit the present application.

It should be noted that, when an element is described as being "fixed to" or "arranged on" another element, the element may be directly located on the another element or indirectly located on the another element. When an element is referred to as being "connected to" another element, the element may be directly connected to the another element or indirectly connected to the another element.

In addition, terms "first" and "second" are used merely for the purpose of description, and shall not be construed as indicating or implying relative importance or implying a quantity of indicated technical features. Therefore, a feature limited by "first" or "second" may explicitly or implicitly include one or more of the features. In the descriptions of the present application, "a plurality of" means two or more, unless otherwise definitely and specifically limited. Unless otherwise explicitly and specifically limited, "several" means one or more than one.

In the description of the present application, it should be understood that an orientation or a position relationship indicated by the terms "upper", "lower", "front", "rear", "left", "right", or the like is an orientation or position relationship shown in the accompanying drawings, and is merely intended to facilitate description and simplify description of the present application, but is not intended to indicate or imply that a specified apparatus or element must have a specific orientation, be constructed in a specific orientation, and operate in a specific orientation. Therefore, the present application cannot be construed as a limitation.

In the descriptions of the present application, it should be noted that, unless otherwise explicitly specified or limited, the terms such as "install", "connect", and "connection" should be understood in a broad sense. For example, the connection may be a fixed connection, a detachable connection, or an integral connection; or the connection may be a mechanical connection or an electrical connection; or the connection may be a direct connection, an indirect connection through an intermediate medium, internal communication between two components, or an interaction relationship between two components. A person of ordinary skill in the art may understand the specific meanings of the foregoing terms in the present application according to specific situations.

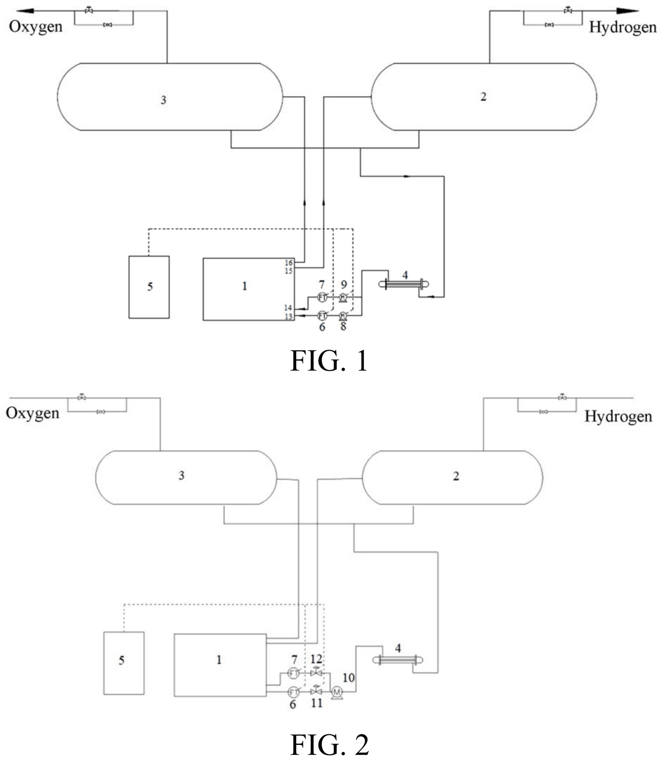

The present application provides a water electrolysis hydrogen production system. As shown in FIG. 1, the system includes an electrolyzer 1, a hydrogen gas-liquid separation unit 2, and an oxygen gas-liquid separation unit 3. A liquid outlet of the hydrogen gas-liquid separation unit 2 is connected to a first pipeline, and a liquid outlet of the oxygen gas-liquid separation unit 3 is connected to a second pipeline. The first pipeline and the second pipeline converge and connect to one end of an alkali electrolyte return main pipeline, and the other end of the alkali electrolyte return main pipeline is connected to an oxygen-side pipeline and a hydrogen-side pipeline that are connected in parallel. The hydrogen-side pipeline is connected to a hydrogen-side flow channel inlet 13 of the electrolyzer, and the oxygen-side pipeline is connected to an oxygen-side flow channel inlet 14 of the electrolyzer. In other words, the alkali electrolyte return main pipeline is a main pipeline for an alkali electrolyte to return from the hydrogen gas-liquid separation unit 2 and the oxygen gas-liquid separation unit 3 to the electrolyzer. The oxygen-side pipeline and the hydrogen-side pipeline that are connected in parallel are two branches for an alkali electrolyte to flow to the oxygen-side flow channel inlet 14 and the hydrogen-side flow channel inlet 13 of the electrolyzer respectively via the alkali electrolyte return main pipeline. The hydrogen-side pipeline is provided with a first flow rate detection assembly 6 and a first flow rate regulation assembly. The oxygen-side pipeline is provided with a second flow rate detection assembly 7 and a second flow rate regulation assembly. A hydrogen-side gas outlet 15 of the electrolyzer is connected to the hydrogen gas-liquid separation unit 2, and an oxygen-side gas outlet 16 of the electrolyzer is connected to the oxygen gas-liquid separation unit 3. The first flow rate detection assembly 6 is a flowmeter in some embodiments, and the second flow rate detection assembly 7 is a flowmeter in some embodiments. Each of the flowmeters is one selected from the group consisting of an area flowmeter, a positive displacement flowmeter, a coriolis flowmeter, and an electromagnetic flowmeter in some embodiments.

Two electrolyte circulation manners are usually used. In the first manner, electrolytes in the hydrogen gas-liquid separation unit 2 and the oxygen gas-liquid separation unit 3 converge and return to the electrolyzer through an inlet at an end portion of the electrolyzer, and then the electrolytes are simultaneously distributed into a cathode side and an anode side of each electrolytic cell. This manner cannot separately control flow fields, pressure, and the like of the electrolytes on the cathode side and the anode side of the electrolytic cell, and cannot control the purity of gas generated on two sides. In the other manner, the electrolyte in the hydrogen gas-liquid separation unit 2 returns to the cathode side of each cell of the electrolyzer, and the electrolyte in the oxygen gas-liquid separation unit 3 returns to the anode side of each cell of the electrolyzer. In this manner, after long-time running, a deviation occurs between concentrations of electrolyte on the cathode side and the anode side. Therefore, an electrolyte circulation tank needs to be additionally disposed, and the electrolytes on the cathode side and the anode side undergo partial exchange.

The water electrolysis hydrogen production system of the present application separately controls flow rates at a hydrogen-side inlet and an oxygen-side inlet of the electrolyzer in some embodiments, so that it can be ensured that the concentrations of alkali electrolytes at the hydrogen-side inlet and the oxygen-side inlet of the electrolyzer are kept consistent, and different control options can be provided for alkali electrolyte circulation strategies under different operating conditions. Specifically, in the present application, the first flow rate regulation assembly and the second flow rate regulation assembly are controlled to implement fine adjustment, to implement the fine adjustment of flow rates of alkali electrolytes that enter the cathode side and the anode side on two sides of a separator in the cell of the electrolyzer, regulate a pressure difference between the cathode side and the anode side of each cell, and decreasing the permeation rate of hydrogen/oxygen, thereby improving the gas purity of oxygen/hydrogen of under different operating conditions, especially, low-load operating conditions.

In an embodiment of the present application, as shown in FIG. 1, the water electrolysis hydrogen production system may further include a control unit 5. The first flow rate detection assembly 6 and the second flow rate detection assembly 7 are respectively electrically coupled to the control unit 5. The first flow rate regulation assembly and the second flow rate regulation assembly are respectively electrically coupled to the control unit 5. The control unit 5 uses an existing single chip microcomputer, PLC controller, or the like in some embodiments, or uses a controller or the like in an existing control apparatus for controlling a hydrogen production apparatus in the water electrolysis hydrogen production system in some embodiments.

In an embodiment of the present application, as shown in FIG. 1, the first flow rate regulation assembly is a first variable frequency pump 8. The control unit 5 receives a signal of the first flow rate detection assembly 6 and is in signal communication with the first variable frequency pump 8. The second flow rate regulation assembly is a second variable frequency pump 9. The control unit 5 receives a signal of the second flow rate detection assembly 7 and is in signal communication with the second variable frequency pump 9. In this embodiment, the first variable frequency pump 8, the second variable frequency pump 9, the first flow rate detection assembly 6, and the second flow rate detection assembly are respectively electrically coupled to the control unit 5. The first flow rate detection assembly 6 and the second flow rate detection assembly 7 are configured to detect electrolyte flow rates of the water electrolysis hydrogen production system, and send the electrolyte flow rates to the control unit 5. Data including input voltage and current and gas purity is fed back to the control unit 5. The control unit 5 controls the rotational speed of the first variable frequency pump 8 and the second variable frequency pump 9 to regulate flow rates on the cathode side and the anode side.

In another embodiment of the present application, as shown in FIG. 2, the alkali electrolyte return main pipeline is provided with a circulating pump 10. The first flow rate regulation assembly includes a first regulating valve 11. The control unit 5 is in signal communication with the first flow rate detection assembly 6 and the first regulating valve 11, and is configured to receive a first flow rate signal from the first flow rate detection assembly 6 and regulate opening and closing of the first regulating valve 11 based on the first flow rate signal. The second flow rate regulation assembly is a second regulating valve 12. The control unit 5 is in signal communication with the second flow rate detection assembly 7 and the second regulating valve 12, and is configured to receive a second flow rate signal from the second flow rate detection assembly 7 and regulate opening and closing of the second regulating valve 12 based on the second flow rate signal. In this embodiment, the first regulating valve 11, the second regulating valve 12, the first flow rate detection assembly 6, and the second flow rate detection assembly 7 are respectively electrically coupled to the control unit 5. The first flow rate detection assembly 6 and the second flow rate detection assembly 7 are configured to detect electrolyte flow rates of the water electrolysis hydrogen production system, and send the electrolyte flow rates to the control unit 5. Data including input voltage and current and gas purity is fed back to the control unit. The control unit 5 controls the openness of the first regulating valve 11 and the second regulating valve 12 to regulate the flow rates on the cathode side and the anode side. In an embodiment of the present application, the first regulating valve 11 and the second regulating valve 12 are well-known control valves capable of continuously controlling valve openness in some embodiments. For example, each of the first regulating valve 11 and the second regulating valve 12 is independently selected from the group consisting of a ball valve, a butterfly valve, a globe valve, a needle valve, a diaphragm control valve, and an electric control valve in some embodiments. The circulating pump 10 is a non-positive displacement pump in some embodiments. For example, the circulating pump 10 is a centrifugal pump, a turbine pump, or the like in some embodiments.

In an embodiment of the present application, as shown in FIG. 1, the water electrolysis hydrogen production system further includes an alkali electrolyte cooler 4 in some embodiments. The alkali electrolyte cooler 4 is disposed on the alkali electrolyte return main pipeline. The alkali electrolyte cooler 4 includes a feed inlet and an outlet port. The outlet port of the alkali electrolyte cooler is connected to the oxygen-side pipeline and the hydrogen-side pipeline that are connected in parallel. In an embodiment of the present application, the outlet port of the alkali electrolyte cooler 4 is connected to a feed inlet of a filter in some embodiments, and an outlet port of the filter is connected to a feed inlet of the circulating pump 10. In the present application, the filter is disposed on the pipeline between the alkali electrolyte cooler 4 and the circulating pump 10 to filter out impurities in the alkali electrolyte.

In an embodiment of the present application, the hydrogen-side pipeline is further provided with a first control valve in some embodiments, and the first control valve is configured to control flow and shutoff of the hydrogen-side pipeline, and control unidirectional flow of liquid in the hydrogen-side pipeline; and the oxygen-side pipeline is further provided with a second control valve in some embodiments, and the second control valve is configured to control flow and shutoff of the oxygen-side pipeline, and control unidirectional flow of liquid in the oxygen-side pipeline. For example, the first control valve and the second control valve are switch valves, shutoff valves, or check valves in some embodiments, and are configured to control flow and shutoff or control unidirectional flow of liquid during malfunction, startup, or shutdown. In the present application, the unidirectional flow of liquid in the hydrogen-side pipeline and the unidirectional flow of liquid in the oxygen-side pipeline are specifically unidirectional flow from the alkali electrolyte cooler to the electrolyzer.

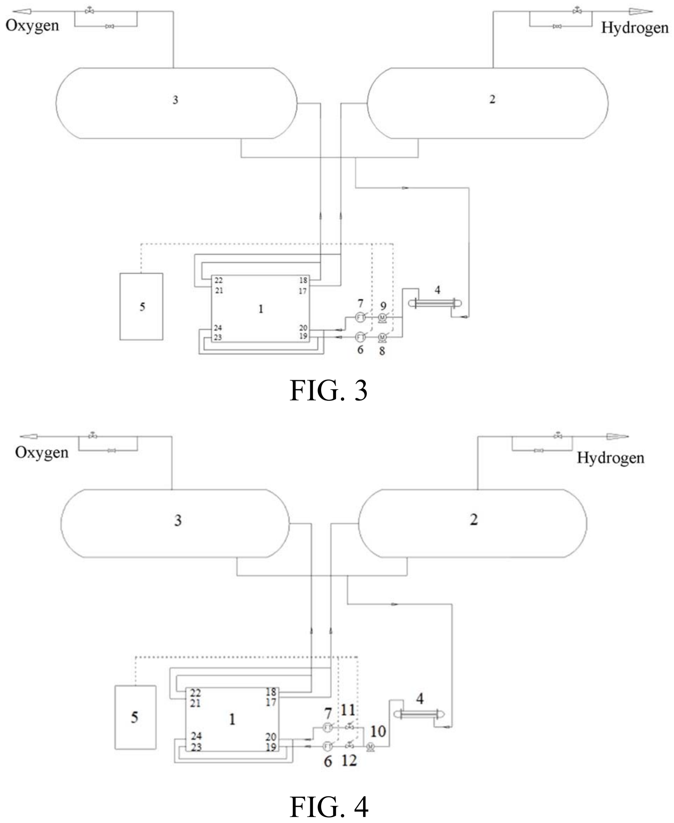

In an embodiment of the present application, the electrolyzer 1 includes an anode plate and a cathode plate in some embodiments. The anode plate and the cathode plate are respectively located at two ends of the electrolyzer 1. The hydrogen-side alkali electrolyte flow inlet 13, the oxygen-side alkali electrolyte flow inlet 14, the hydrogen-side gas outlet 15, and the oxygen-side gas outlet 16 are provided at the end of the cathode plate of the electrolyzer 1. In an exemplary implementation of the present application, as shown in FIG. 3 and FIG. 4, the electrolyzer 1 includes a anode plate, a first cathode plate, and a second cathode plate. The anode plate is located in the middle of the electrolyzer, and the first cathode plate and the second cathode plate are respectively located at the two ends of the electrolyzer. A first hydrogen-side gas outlet 17, a first oxygen-side gas outlet 18, a first hydrogen-side flow channel inlet 19, and a first oxygen-side flow channel inlet 20 are provided at the end of the first cathode plate of the electrolyzer 1. A second hydrogen-side gas outlet 21, a second oxygen-side gas outlet 22, a second hydrogen-side flow channel inlet 23, and a second oxygen-side flow channel inlet 24 are provided at the end of the second cathode plate of the electrolyzer 1. The hydrogen-side pipeline is connected to a first hydrogen-side pipeline and a second hydrogen-side pipeline that are connected in parallel. The oxygen-side pipeline is connected to a first oxygen-side pipeline and a second oxygen-side pipeline that are connected in parallel. The first hydrogen-side gas outlet 17 and the second hydrogen-side gas outlet 21 are connected to a feed inlet pipeline of the hydrogen gas-liquid separation unit 2. The first oxygen-side gas outlet 18 and the second oxygen-side gas outlet 22 are connected to a feed inlet pipeline of the oxygen gas-liquid separation unit 3. The first hydrogen-side pipeline is connected to the first hydrogen-side flow channel inlet 19 of the electrolyzer 1. The second hydrogen-side pipeline is connected to the second hydrogen-side flow channel inlet 23 of the electrolyzer 1. The first oxygen-side pipeline is connected to the first oxygen-side flow channel inlet 20 of the electrolyzer 1, and the second oxygen-side pipeline is connected to the second oxygen-side flow channel inlet 24 of the electrolyzer 1.

In an embodiment of the present application, the water electrolysis hydrogen production system further includes at least two electrolyzers in some embodiments. Ends of pipes of the hydrogen-side gas outlets of the electrolyzers that are in direct communication with the hydrogen gas-liquid separation unit 2 converge and connect to the feed inlet of the hydrogen gas-liquid separation unit 2. Ends of pipes of the oxygen-side gas outlets of the electrolyzers that are in direct communication with the oxygen gas-liquid separation unit 3 converge and connect to the feed inlet of the oxygen gas-liquid separation unit 3.

In an embodiment of the present application, a hydrogen-side gas outlet temperature detection assembly is provided on the pipeline of the hydrogen-side gas outlet in some embodiments; and/or, an oxygen-side gas outlet temperature detection assembly is provided on the pipeline of the oxygen-side gas outlet in some embodiments. The hydrogen-side gas outlet temperature detection assembly and the oxygen-side gas outlet temperature detection assembly are configured to detect the temperature of the electrolyzer. A hydrogen-side alkali electrolyte flow inlet temperature detection assembly is provided on the pipeline of the hydrogen-side alkali electrolyte flow inlet in some embodiments; and/or, an oxygen-side alkali electrolyte flow inlet temperature detection assembly is provided on the pipeline of the oxygen-side alkali electrolyte flow inlet in some embodiments. The hydrogen-side alkali electrolyte flow inlet temperature detection assembly and the oxygen-side alkali electrolyte flow inlet temperature detection assembly are configured to detect the temperature of the alkali electrolyte.

In an embodiment of the present application, the hydrogen gas-liquid separation unit 2 further includes a hydrogen-side gas-liquid separator, a hydrogen-side washer, and a hydrogen-side cooler in some embodiments. The oxygen gas-liquid separation unit 3 further includes an oxygen-side gas-liquid separator, an oxygen-side washer, and an oxygen-side cooler in some embodiments. A gas-liquid inlet of the hydrogen-side gas-liquid separator is connected to the hydrogen-side gas outlet of the electrolyzer, a gas outlet of the hydrogen-side gas-liquid separator is connected to a gas inlet of the hydrogen-side washer, and a gas outlet of the hydrogen-side washer is connected to a gas inlet of the hydrogen-side cooler. A gas-liquid inlet of the oxygen-side gas-liquid separator is connected to the oxygen-side gas outlet of the electrolyzer, a gas outlet of the oxygen-side gas-liquid separator is connected to a gas inlet of the oxygen-side washer, and a gas outlet of the oxygen-side washer is connected to a gas inlet of the oxygen-side cooler.

In an embodiment of the present application, the hydrogen-side cooler is connected to a hydrogen-side entrainment separator in some embodiments, and the oxygen-side cooler is connected to an oxygen-side entrainment separator. The hydrogen-side entrainment separator and the oxygen-side entrainment separator of the present application can further remove water in hydrogen and oxygen.

In an embodiment of the present application, to recover water in a gas-liquid separation process, the hydrogen-side washer, the hydrogen-side cooler, and the hydrogen-side entrainment separator are integrated in some embodiments. The oxygen-side washer, the oxygen-side cooler, and the oxygen-side entrainment separator are integrated in some embodiments. In other words, the hydrogen-side gas-liquid separator further communicates with an integrated washing-cooling-water removal device, and the oxygen-side gas-liquid separator further communicates with an integrated washing-cooling-water removal device.

In an embodiment of the present application, the water electrolysis hydrogen production system further includes a gas purity detection assembly in some embodiments, where the gas purity detection assembly is electrically coupled to the control unit 5, and is configured to detect hydrogen content in oxygen and oxygen content in hydrogen prepared by the water electrolysis hydrogen production system.

In an embodiment of the present application, the electrolyzer includes a tank 101, where a plurality of electrolytic cells are provided in the tank 101, and each of the electrolytic cells include an anode region and a cathode region. A filter-press type bipolar electrolyzer is used as an example. The tank 101 is usually made of a plurality of annular electrode frames, and electrode sheets in the electrode frames divide the tank 101 into a plurality of electrolytic cells. A separator is provided between two adjacent electrode sheets, to further divide the electrolytic cells into the anode region that can generate oxygen and the cathode region that can generate hydrogen. To facilitate the clear expression of a flow channel structure in the present application, the structure of the electrolytic cells in the tank is omitted. A first electrode plate 102 is provided in the tank 101, and a first cavity 121 and a second cavity 122 that are spaced apart are formed in the first electrode plate 102.

The electrolyzer further includes a first flow field structure 104 and a second flow field structure 105. The first flow field structure 104 includes a first electrolyte feed flow channel 141 and a first electrolyte distribution channel 142 that are provided in a wall of the tank 101, the first electrolyte distribution channel 142 is configured to communicate with the plurality of anode regions and communicate with the first electrolyte feed flow channel 141 through the first cavity 121. The second flow field structure 105 includes a second electrolyte feed flow channel 151 and a second electrolyte distribution channel 152 that are provided in the wall of the tank 101, where the second electrolyte distribution channel 152 is configured to communicate with the plurality of cathode regions and communicate with the second electrolyte feed flow channel 151 through the second cavity 122. The wall of the tank 101 is annular electrode frames constructed as the tank 101.

Through the foregoing technical solution, the first flow field structure 104 communicates with the plurality of anode regions through the first electrolyte distribution channel 142, and the second flow field structure 15 communicates with the plurality of cathode regions through the second electrolyte distribution channel 152. An operator can feed electrolytes into the anode region and the cathode region through the first flow field structure 104 and the second flow field structure 105, respectively. When an amount of an electrolyte required in the cathode region is different from an amount of an electrolyte required in the anode region, the operator can accurately feed electrolytes into the anode region and the cathode region, respectively. In addition, the electrolyte fed into the anode region then enters the first electrolyte distribution channel 142 via first electrolyte feed flow channel 141 and the first cavity 121, and the electrolyte fed into the cathode region then enters the second electrolyte distribution channel 152 via second electrolyte feed flow channel 151 and the second cavity 122. The first electrolyte feed flow channel 141, the first cavity 121, the second electrolyte feed flow channel 151, and the second cavity 122 can buffer electrolytes and reduce the temperature of the electrolyzer, to make the temperature and flow field in the electrolyzer more distributed more uniformly. In this way, the electrolytes are more stable when entering the first electrolyte distribution channel 142 and the second electrolyte distribution channel 152, thereby keeping an amount of the electrolyte fed into the anode region and the cathode region at inlet regions of the first electrolyte distribution channel 142 and the second electrolyte distribution channel 152 from being greater than an amount of the electrolyte fed into the anode region and the cathode region far away from the inlet regions of the first electrolyte distribution channel 142 and the second electrolyte distribution channel 152, so that the operator can accurately feed electrolytes into the anode region and the cathode region.

It should be noted that the use of the electrolyzer 101 in the embodiments of the present application is not limited to the water electrolysis hydrogen production system, and the electrolyzer 101 in the embodiments of the present application can be independently used from the water electrolysis hydrogen production system.

In an embodiment of the present application, through the separate electrolyte feed design of the anode region and the cathode region, the content of electrolytes in the anode region and the cathode region can be independently controlled, to provide flow fields in the electrolyzer with particular external operability, so that the control flexibility of the flow fields in the electrolyzer can be expanded, it is convenient to adjust the running performance of the electrolyzer, and the running performance and gas purity of the electrolyzer can be further improved. For example, renewable energy sources such as wind energy are used to supply energy to the electrolyzer during electrolytic water hydrogen production. Due to the impact of environmental factors, energy supply may fluctuate, further causing fluctuations in the electrolysis power of the electrolyzer. For example, when the fluctuations in the electrolysis power of the electrolyzer intensify the entry of hydrogen generated in the cathode region into the anode region via the separator, the hydrogen content in oxygen in the anode region increases. The hydrogen content in oxygen exceeding 4% poses a risk of explosion. When the foregoing case occurs, the flow rate in the first flow field structure 104 can be regulated to increase the electrolyte feed rate into the anode region, and the flow rate in the second flow field structure 105 is simultaneously regulated to decrease the electrolyte feed rate into the cathode region, so that the pressure in the anode region and the pressure in the cathode region can be balanced, thereby avoiding gas crossover.

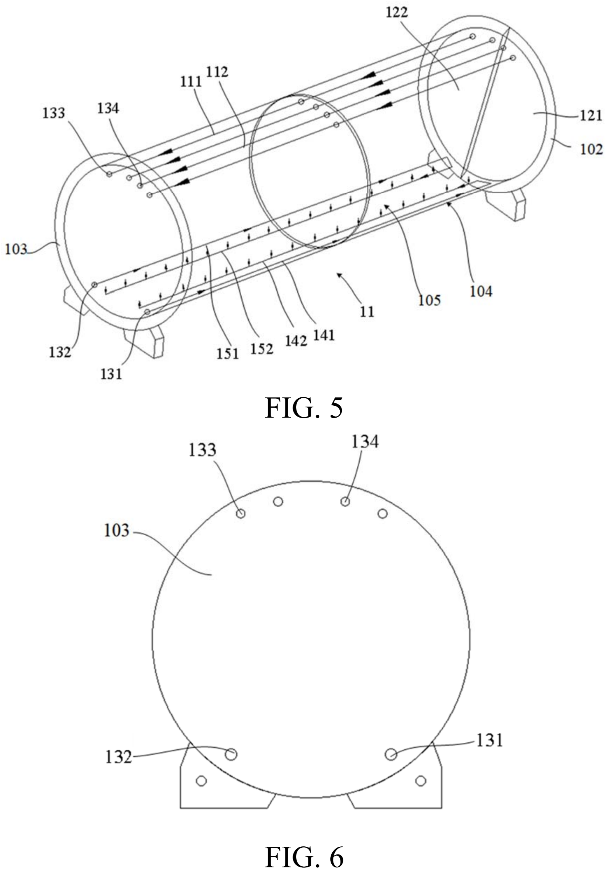

In another embodiment of the present application, the electrolyzer further includes a second electrode plate 103 in some embodiments. A first inlet 131 of the first electrolyte feed flow channel 141 is provided on the second electrode plate 103 in some embodiments, and a second inlet 132 of the second electrolyte feed flow channel 151 is provided on the second electrode plate 103 in some embodiments. In some implementations, the first electrode plate 102 and the second electrode plate 103 are respectively disposed at two ends of the tank 101 in some embodiments. For details, refer to FIG. 5. In this case, the first electrolyte feed flow channel 141, the first electrolyte distribution channel 142, the second electrolyte feed flow channel 151, and the second electrolyte distribution channel 152 separately extends from one end of the tank 101 to the other end of the tank 101 in some embodiments. In this way, the first electrolyte distribution channel 142 and the second electrolyte distribution channel 152 can flow through all the electrolytic cells. In addition, this design can further increase the lengths of the first electrolyte feed flow channel 141 and the second electrolyte feed flow channel 151, thereby ensuring the use effects of the first electrolyte feed flow channel 141 and the second electrolyte feed flow channel 151.

Generally, an end clamp plate is disposed at each of the two ends of the tank 101, and the end clamp plates can make the tank 101 more stable. When the second electrode plate 103 is disposed at an end portion of the tank 101, a plurality of through holes are correspondingly opened in the end clamp plate in some embodiments. The plurality of through holes can respectively correspond to the first inlet 131 and the second inlet 132, thereby ensuring the use of the second electrode plate 103.

Through the adjustment of the quantities and arrangement positions of the first electrode plate 102 and the second electrode plate 103, the first flow field structure 104 and the second flow field structure 105 can further regulate electrolyte feed rates by regions. In some implementations, the second electrode plate 103 is further symmetrically disposed on two sides of the first electrode plate 102 in an extension direction of the tank 101 and spaced apart from the first electrode plate 102 in some embodiments. In this way, the first flow field structure 104 and the second flow field structure 105 are respectively provided in regions on the two sides of the first electrode plate 102. The operator can separately regulate electrolyte feed rates into the regions on the two sides of the first electrode plate 102.

In another embodiment of the present application, a plurality of first electrode plates 102 are disposed at equal intervals on a side of the second electrode plate 103 in the extension direction of the tank 101, to implement the regulation of fed electrolytes by regions. In this way, the operator can separately regulate electrolyte feed rate into a region between the first electrode plate 102 and the second electrode plate 103 and a region between two adjacent second electrode plates 103.

The foregoing two implementations of regulating fed electrolytes by regions can prevent the extension paths of the electrolyte distribution channels from being excessively long, electrolytes fed into the electrolytic cells can cool the electrolytes that already exist in the electrolytic cells, thereby keeping the temperature of the electrolyzer from being excessively high. Electrolytes to be fed are cooled before being fed into the tank 101, and the tank 101 also generates heat during electrolysis operation. If the extension paths of the electrolyte distribution channels are excessively long, the temperature of the electrolytes in the flow field structures rises quickly, making it difficult to reduce the temperature of the electrolyzer.

In a manufacturing process of the first electrode plate 102, the shapes and volumes of the first cavity 121 and the second cavity 122 are designed according to a requirement of a flow rate of an electrolyte in some embodiments. For example, when the flow rate of the electrolyte is small, the first cavity 121 and the second cavity 122 are disposed with small volumes in some embodiments. In addition, the first cavity 121 and the second cavity 122 have the same volume in some embodiments, thereby facilitating the preparation of the electrode plates and extending the service life of the electrode plates. In this way, it can be ensured that the first cavity 121 and the second cavity 122 have the same use effect. When a plurality of first flow field structures 104 and a plurality of second flow field structures 105 are provided, a plurality of first cavities 121 and a plurality of second cavities 122 can also have a one-to-one correspondence, thereby ensuring that the volumes of the plurality of first cavities 121 are the same as the volumes of the plurality of second cavities 122.

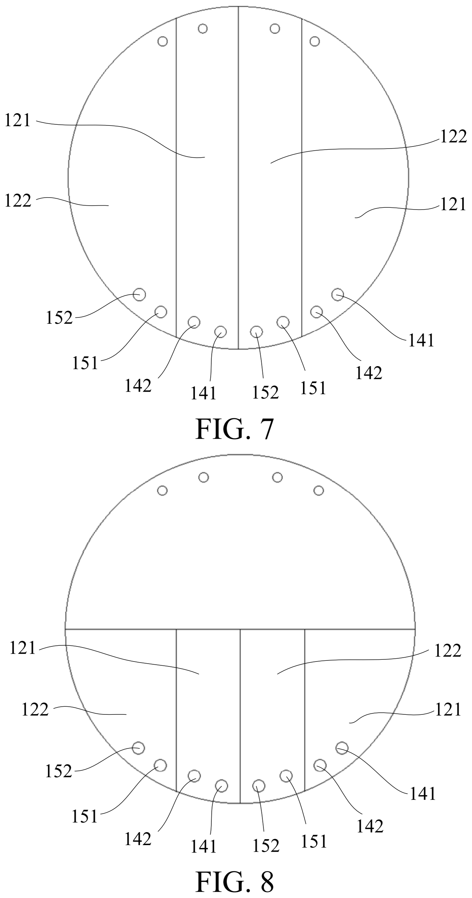

In a first embodiment of the present application, referring to FIG. 7, the first cavity 121 and the second cavity 122 are constructed to extend from the bottom end of the first electrode plate 102 to the top end in some embodiments. In a second embodiment of the present application, referring to FIG. 8, the first cavity 121 and the second cavity 122 are constructed to extend from the bottom end of the first electrode plate 102 to the middle region in some embodiments. The size of the first electrode plate 102 can be maximally utilized in both the foregoing embodiments.

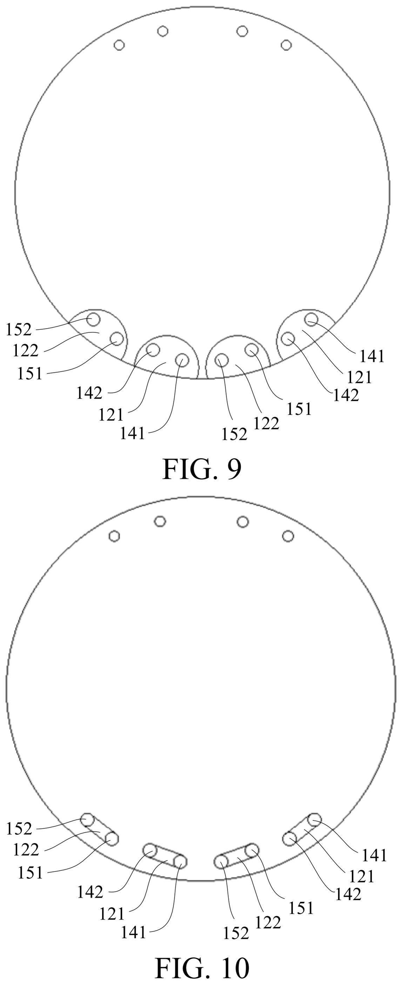

In a third embodiment of the present application, referring to FIG. 9, in this case, the first cavity 121 and the second cavity 122 are constructed to arch upward from the bottom of the first electrode plate 102 in some embodiments. Compared with the first embodiment and the second embodiment, the construction of arching upward from the bottom of the first electrode plate 102 can further reduce the volumes of the first cavity 121 and the second cavity 122.

In a fourth embodiment of the present application, referring to FIG. 10, the first cavity 121 and the second cavity 122 are constructed as obround cavity channels in some embodiments. The electrolyte feed flow channels can be in direct communication with the electrolyte distribution channels through the obround cavity channels, making the volumes of the first cavity 121 and the second cavity 122 smaller.

The plurality of first flow field structures 104 and the plurality of second flow field structures 105 are provided in some embodiments. Through the increases in the quantities of the first flow field structures 104 and the second flow field structures 105, the operator can regulate more precisely the flow rates of the electrolytes to be fed into the anode region and the cathode region, thereby adapting to and matching the fluctuations in the electrolysis power of the electrolyzer at a higher response speed.

In an embodiment of the present application, the plurality of first flow field structures 104 and the plurality of second flow field structures 105 are arranged alternately and at intervals in a circumferential direction of the tank 101 in some embodiments. In this way, the plurality of first flow field structures 104 and the plurality of second flow field structures 105 can cover a larger range, and the arrangement positions of the plurality of first flow field structures 104 and the plurality of second flow field structures 105 are kept from being excessively concentrated. When being fed, an electrolyte enters the anode region and the cathode region more uniformly, and simultaneously performs sufficient heat exchange with the electrolyzer during feeding, thereby facilitating the overall temperature uniformity of the electrolyzer.

The diameter of the first electrolyte feed flow channel 141 is not less than that of the first electrolyte distribution channel 142 in some embodiments, and the diameter of the second electrolyte feed flow channel 151 is not less than that of the second electrolyte distribution channel 152 in some embodiments. In this way, the pressure and the flow speed of the electrolytes in the first electrolyte distribution channel 142 and the second electrolyte distribution channel 152 can be ensured, so that the electrolytes in the first electrolyte distribution channel 142 and the second electrolyte distribution channel 152 can enter the anode region and the cathode region more easily, and the electrolytes in the anode region and the cathode region are kept from returning to the first electrolyte distribution channel 142 and the second electrolyte distribution channel 152.

In an embodiment of the present application, the electrolyzer includes a first gas outlet 133 and a second gas outlet 134 that are provided in the second electrode plate 103 in some embodiments. The tank 101 is provided with a first exhaust flow channel 111 that can communicate with the plurality of anode regions and a second exhaust flow channel 112 that can communicate with the plurality of cathode regions. The first exhaust flow channel 111 and the second exhaust flow channel 112 can collect gas generated during electrolysis operation. Referring to FIG. 5 and FIG. 6, the first gas outlet 133, the second gas outlet 134, the first exhaust flow channel 111, and the second exhaust flow channel 112 are disposed in an upper half region of the electrolyzer in some embodiments. In this way, the collection of gas is facilitated, and due to the characteristic of gas, gas generated in the anode region and the cathode region moves upward. Correspondingly, the first flow field structure 104 and the second flow field structure 105 are disposed in a lower half region of the electrolyzer in some embodiments. In addition, the first exhaust flow channel 111 and the second exhaust flow channel 112 are alternatively arranged alternately and at intervals in the circumferential direction of the tank 101 in some embodiments, so that gas in the anode region and the cathode region is discharged as quickly as possible, and the overall temperature uniformity of the electrolyzer is facilitated.

In an embodiment of the present application, the electrolyzer further includes a regulation assembly in some embodiments. The regulation assembly is configured to separately regulate the pressure, flow speed, and flow rates of electrolytes in the first flow field structure 104 and the second flow field structure 105. The regulation assembly is a liquid pressure regulating valve, a liquid flow speed regulating valve, or the like in some embodiments. The electrolyte first flows through regulation assemblies such as the liquid pressure regulating valve and the liquid flow speed regulating valve flows into the first flow field structure 104 and the second flow field structure 105. Through the regulation assemblies, the operator can feed the electrolyte into the anode region and the cathode region more accurately.

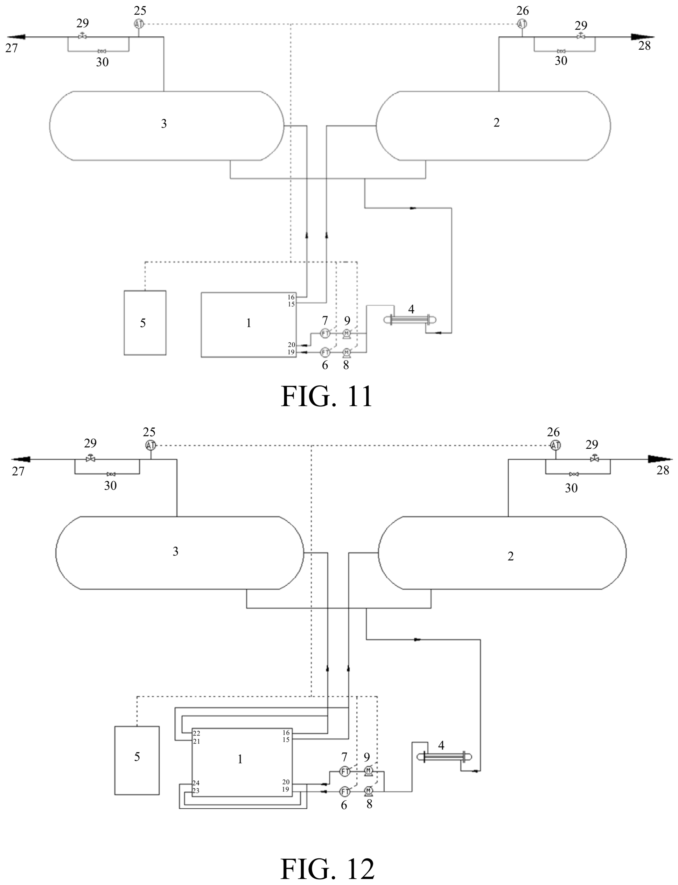

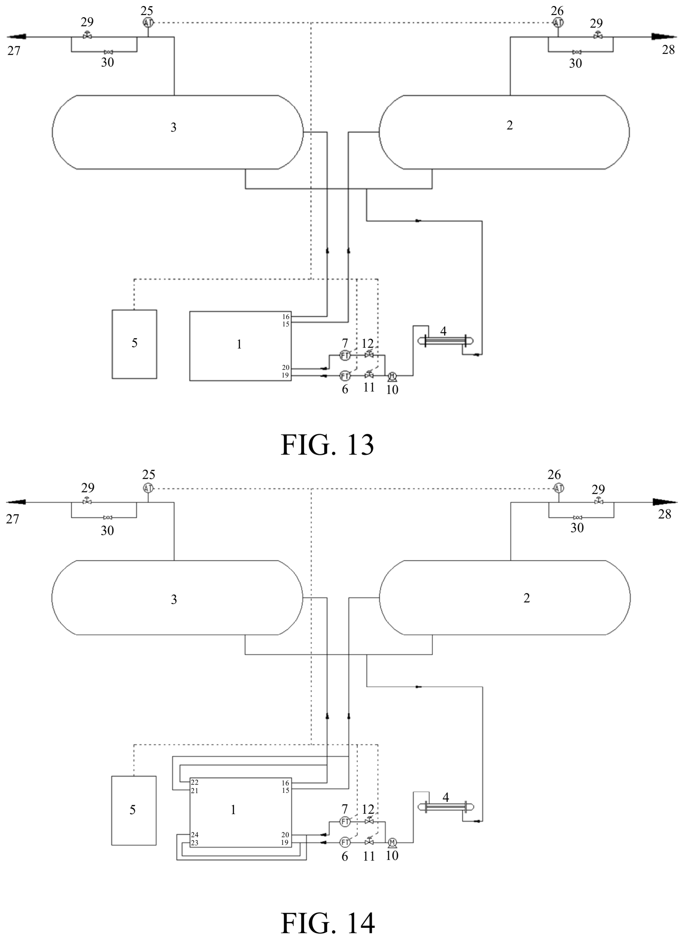

In FIG. 11 to FIG. 14, a water electrolysis hydrogen production system is provided, in which a hydrogen production apparatus and an apparatus for controlling gas purity of the present application disposed on the hydrogen production apparatus are exemplarily shown. The hydrogen production apparatus includes an electrolyzer 1, an oxygen-side gas-liquid separation unit 3, a hydrogen-side gas-liquid separation unit 2, an electrolyte cooler 4, an oxygen outlet 27, a hydrogen outlet 28, a second valve 29, and a third valve 30. Generally, the electrolyzer 1 is provided with an oxygen-side flow channel inlet 20 and a hydrogen-side flow channel inlet 19 for inflow of electrolytes and an oxygen-side gas outlet 16, and a hydrogen-side gas outlet 15 for outflow of a mixed fluid of gas (hydrogen/oxygen) and the electrolytes. As required, more than one (for example, one, two, three, four or five) oxygen-side flow channel inlet 20, hydrogen-side flow channel inlet 19, oxygen-side gas outlet 16, and hydrogen-side gas outlet 15 are independently disposed in some embodiments. In addition, two control valves (for example, the second valve 29 and the third valve 30) that are connected in parallel are usually further disposed on each of the pipeline of the oxygen outlet 27 and the pipeline of the hydrogen outlet 28, thereby facilitating the control of the pressure, liquid level, and the like in the oxygen-side gas-liquid separation unit 3 and the hydrogen-side gas-liquid separation unit 2. The hydrogen production apparatus is merely used for clearly describing the apparatus for controlling gas purity in a water electrolysis hydrogen production system of the present application. An exemplary and simplified hydrogen production apparatus further specifically includes a power supply for electrolysis and structures in an existing hydrogen production apparatus such as structures other than the gas-liquid separation unit in the hydrogen production apparatus in some embodiments. The apparatus for controlling gas purity of the present application is disposed in the hydrogen production apparatus, thereby facilitating the description of the technical solution of the apparatus for controlling gas purity of the present application.

Specifically, the gas purity detection assembly acquires hydrogen content in oxygen and oxygen content in hydrogen prepared by the water electrolysis hydrogen production system, and transfers the information to a control unit 5, so that the control unit 5 can control an electrolyte flow rate at the hydrogen-side flow channel inlet 19 and an electrolyte flow rate at the oxygen-side flow channel inlet 20 of the electrolyzer 1 through a first variable frequency pump 8 and a second variable frequency pump 9, respectively, and detect changes in the electrolyte flow rates at the hydrogen-side flow channel inlet 19 and the oxygen-side flow channel inlet 20 through a first flow rate detection assembly 6 and a second flow rate detection assembly 7 respectively, to implement precise control of flow rates, thereby accurately controlling a pressure difference between a cathode cell and an anode cell, implementing accurate control of purity of prepared gas, and decreasing oxygen content in hydrogen and hydrogen content in oxygen.

The present application further provides a method for controlling gas purity in a water electrolysis hydrogen production process, including:
acquiring hydrogen content in oxygen and oxygen content in hydrogen prepared by a hydrogen production system;
increasing an electrolyte flow rate at an oxygen-side flow channel inlet of an electrolyzer and/or decreasing an electrolyte flow rate at a hydrogen-side flow channel inlet of the electrolyzer when the hydrogen content in oxygen is greater than a first content value until the hydrogen content in oxygen is less than or equal to a first target value; and
increasing the electrolyte flow rate at the hydrogen-side flow channel inlet of the electrolyzer and/or decreasing the electrolyte flow rate at the oxygen-side flow channel inlet of the electrolyzer when the oxygen content in hydrogen is greater than a second content value until the oxygen content in hydrogen is less than or equal to a second target value.

This embodiment provides a method for controlling gas purity in a water electrolysis hydrogen production process, so that the purity of gas (that is, the hydrogen content in oxygen and the oxygen content in hydrogen) prepared by the hydrogen production system can be controlled through the foregoing apparatus for controlling gas purity in a water electrolysis hydrogen production system.

The "acquiring hydrogen content in oxygen and oxygen content in hydrogen prepared by a hydrogen production system" is implemented through the foregoing "gas purity detection assembly" in some embodiments. The electrolyte flow rates are increased or decreased through the cooperation of "the control unit 5", "the first variable frequency pump 8, the second variable frequency pump 9, the first regulating valve 11, and the second regulating valve 12", and "the first flow rate detection assembly 6 and the second flow rate detection assembly 7" in some embodiments.

All the first content value, the first target value, the second content value, and the second target value can be preset values. In this embodiment, the first content value is a volume fraction ranging from 0.5% to 1.5% in some embodiments; the first target value is a volume fraction ranging from 0.5% to 1.5%; the second content value is a volume fraction ranging from 0.5% to 1.5%; and the second target value is a volume fraction ranging from 0.5% to 1.5%. A person skilled in the art may specifically set proper values within the foregoing ranges as required.

In the foregoing method, the electrolyte flow rate at the oxygen-side flow channel inlet and the electrolyte flow rate at the hydrogen-side flow channel inlet of the electrolyzer can be regulated based on the acquired hydrogen content in oxygen and oxygen content in hydrogen, to regulate a pressure difference between a cathode cell and an anode cell, thereby achieving the objective of controlling purity of prepared gas.

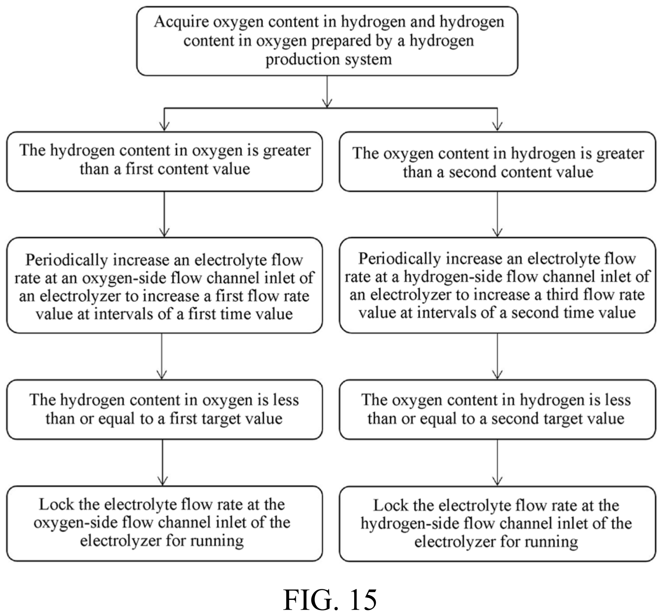

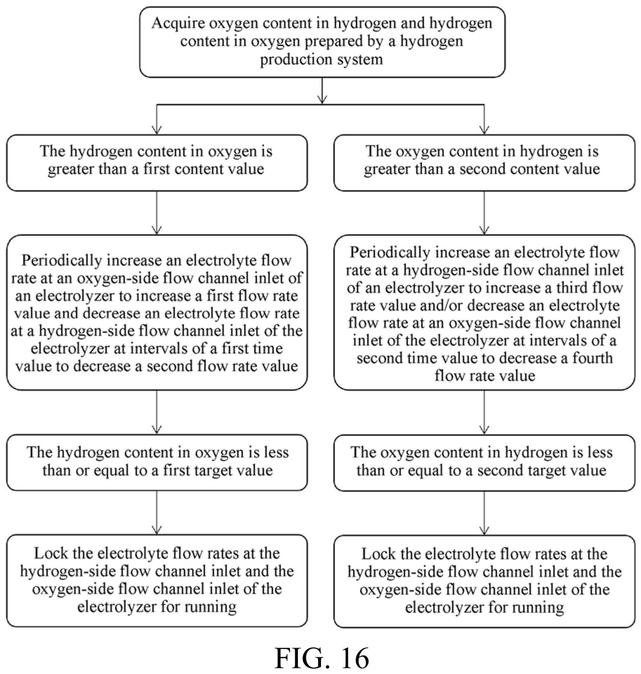

In an embodiment of the present application, as shown in FIG. 15 and FIG. 16, the increasing an electrolyte flow rate at an oxygen-side flow channel inlet of an electrolyzer and/or decreasing an electrolyte flow rate at a hydrogen-side flow channel inlet of the electrolyzer when the hydrogen content in oxygen is greater than a first content value until the hydrogen content in oxygen is less than or equal to a first target value is:
periodically increasing the electrolyte flow rate at the oxygen-side flow channel inlet of the electrolyzer to increase a first flow rate value and/or decreasing the electrolyte flow rate at the hydrogen-side flow channel inlet of the electrolyzer at intervals of a first time value to decrease a second flow rate value when the hydrogen content in oxygen is greater than the first content value until the hydrogen content in oxygen is less than or equal to the first target value; and/or
the increasing the electrolyte flow rate at the hydrogen-side flow channel inlet of the electrolyzer and/or decreasing the electrolyte flow rate at the oxygen-side flow channel inlet of the electrolyzer when the oxygen content in hydrogen is greater than a second content value until the oxygen content in hydrogen is less than or equal to a second target value is:
   periodically increasing the electrolyte flow rate at the hydrogen-side flow channel inlet of the electrolyzer to increase a third flow rate value and/or decreasing the electrolyte flow rate at the oxygen-side flow channel inlet of the electrolyzer at intervals of a second time value to decrease a fourth flow rate value when the oxygen content in hydrogen is greater than the second content value until the oxygen content in hydrogen is less than or equal to the second target value.

Similar to the first content value, the first target value, the second content value, and the second target value, the first time value, the first flow rate value, the second flow rate value, the second time value, the third flow rate value, and fourth flow rate value can also be preset values. In addition, the first flow rate value, the second flow rate value, the third flow rate value, and the fourth flow rate value can be a value or proportion of a flow rate increased or reduced compared with that before the current adjustment. In this embodiment, the first content value is a volume fraction ranging from 0.5% to 1.5%; the first time value ranges from 0.5 hours to 10 hours, and ranges from 2 hours to 8 hours in some embodiments; the first flow rate value ranges from 0.5% to 1% of the electrolyte flow rate at the oxygen-side flow channel inlet before the current adjustment; the second flow rate value ranges from 0.5% to 1% of the electrolyte flow rate at the hydrogen-side flow channel inlet before the current adjustment; the first target value is a volume fraction ranging from 0.5% to 1.5%; the second content value is a volume fraction ranging from 0.5% to 1.5%; the second time value ranges from 0.5 hours to 10 hours, and ranges from 2 hours to 8 hours in some embodiments; the third flow rate value ranges from 0.5% to 1% of the electrolyte flow rate at the hydrogen-side flow channel inlet before the current adjustment; the fourth flow rate value ranges from 0.5% to 1% of the electrolyte flow rate at the oxygen-side flow channel inlet before the current adjustment; and the second target value is a volume fraction ranging from 0.5% to 1.5%. A person skilled in the art may specifically set proper values within the foregoing ranges as required.

Based on the foregoing embodiment, this embodiment further provides a more preferred method for controlling gas purity. For the regulation of flow rates, because changes in flow rates of electrolytes that flow into an oxygen-side flow channel inlet and a hydrogen-side flow channel inlet cannot be reflected in the hydrogen content in oxygen/the oxygen content in hydrogen in time. Instead, changes in the hydrogen content in oxygen/the oxygen content in hydrogen exhibit a particular degree of hysteresis. Therefore, in this embodiment, when the hydrogen content in oxygen is greater than first content value/when the oxygen content in hydrogen is greater than the second content value, the flow rates of the electrolytes that flow into the oxygen-side flow channel inlet and the hydrogen-side flow channel inlet are periodically controlled. After a specific flow rate (the first flow rate value/the second flow rate value/the third flow rate value/the fourth flow rate value) is regulated, after a wait of a specific time (the first time value/the second time value), the hydrogen content in oxygen or the oxygen content in hydrogen is observed. If a requirement (the hydrogen content in oxygen is less than or equal to the first target value or the oxygen content in hydrogen is less than or equal to the second target value) is not met, corresponding control continues to be performed until the hydrogen content in oxygen or the oxygen content in hydrogen meets the requirement (the hydrogen content in oxygen is less than or equal to the first target value or the oxygen content in hydrogen is less than or equal to the second target value), regulation is stopped, and stable generation is performed under the condition. In this way, the control of gas purity can be implemented more reliably, accurately, and safely, thereby preventing excessive regulation from causing a production halt or a safety accident.

Regarding the regulation of the hydrogen content in oxygen or the oxygen content in hydrogen, only the electrolyte flow rate at the hydrogen-side flow channel inlet or the electrolyte flow rate at the oxygen-side flow channel inlet can be regulated, or both the electrolyte flow rate at the hydrogen-side flow channel inlet and the electrolyte flow rate at the oxygen-side flow channel inlet can be regulated. Compared with the former, in the latter manner, the extent of regulation each time is usually small.

As shown in FIG. 15, the solution of regulating only the electrolyte flow rate at the hydrogen-side flow channel inlet or the electrolyte flow rate at the oxygen-side flow channel inlet is provided, including: acquiring the oxygen content in hydrogen and the hydrogen content in oxygen prepared by the hydrogen production system, periodically increasing the electrolyte flow rate at the oxygen-side flow channel inlet of the electrolyzer at intervals of a first time value to increase the first flow rate value when the hydrogen content in oxygen is greater than the first content value until the hydrogen content in oxygen is less than or equal to the first target value, and then locking the electrolyte flow rate at the oxygen-side flow channel inlet of the electrolyzer for running; and periodically increasing the electrolyte flow rate at the hydrogen-side flow channel inlet of the electrolyzer at intervals of a second time value to increase the third flow rate value when the oxygen content in hydrogen is greater than the second content value until the oxygen content in hydrogen is less than or equal to the second target value, and then locking the electrolyte flow rate at the hydrogen-side flow channel inlet of the electrolyzer for running.

As shown in FIG. 16, the solution for regulating both the electrolyte flow rate at the hydrogen-side flow channel inlet and the electrolyte flow rate at the oxygen-side flow channel inlet: acquiring the oxygen content in hydrogen and the hydrogen content in oxygen prepared by the hydrogen production system, periodically increasing the electrolyte flow rate at the oxygen-side flow channel inlet of the electrolyzer to increase the first flow rate value and decreasing the electrolyte flow rate at the hydrogen-side flow channel inlet of the electrolyzer to decrease the second flow rate value at intervals of a first time value when the hydrogen content in oxygen is greater than the first content value until the hydrogen content in oxygen is less than or equal to the first target value, and then locking the electrolyte flow rates at the hydrogen-side flow channel inlet and the oxygen-side flow channel inlet of the electrolyzer for running; and periodically increasing the electrolyte flow rate at the hydrogen-side flow channel inlet of the electrolyzer to increase the third flow rate value and decreasing the electrolyte flow rate at the oxygen-side flow channel inlet of the electrolyzer to decrease fourth flow rate value at intervals of a second time value when the oxygen content in hydrogen is greater than the second content value until the oxygen content in hydrogen is less than or equal to the second target value, and then locking the electrolyte flow rates at the hydrogen-side flow channel inlet and the oxygen-side flow channel inlet of the electrolyzer for running.

The present application further provides an apparatus for controlling gas purity in a water electrolysis hydrogen production system, including: a controller unit, a gas purity detection assembly, a flow rate detection assembly, and a flow rate regulation assembly. The controller unit is configured to determine a regulation value for an electrolyte flow rate at an oxygen-side flow channel inlet and an electrolyte flow rate at a hydrogen-side flow channel inlet of an electrolyzer based on hydrogen content in oxygen and oxygen content in hydrogen prepared by the water electrolysis hydrogen production system and the electrolyte flow rate at the oxygen-side flow channel inlet and the electrolyte flow rate at the hydrogen-side flow channel inlet of the electrolyzer. The gas purity detection assembly is electrically coupled to the controller unit, and is configured to detect the hydrogen content in oxygen and the oxygen content in hydrogen prepared by the water electrolysis hydrogen production system. The flow rate detection assembly is electrically coupled to the controller unit, and is configured to detect the electrolyte flow rate at the oxygen-side flow channel inlet and the electrolyte flow rate at the hydrogen-side flow channel inlet of the electrolyzer. The flow rate regulation assembly is electrically coupled to the controller unit, and is configured to regulate the electrolyte flow rate at the oxygen-side flow channel inlet and the electrolyte flow rate at the hydrogen-side flow channel inlet of the electrolyzer.

In an embodiment of the present application, as shown in FIG. 11 to FIG. 14, the gas purity detection assembly includes a first gas purity detection component 25 and a second gas purity detection component 26. The first gas purity detection component 25 is electrically coupled to the controller unit, and can detect the hydrogen content in oxygen prepared by the water electrolysis hydrogen production system. The second gas purity detection component 26 is electrically coupled to the controller unit, and can detect the oxygen content in hydrogen prepared by the water electrolysis hydrogen production system. The present application provides the structure of a specific gas purity detection assembly. That is, the hydrogen content in oxygen and the oxygen content in hydrogen prepared by the water electrolysis hydrogen production system are detected through the first gas purity detection component 25 and the second gas purity detection component 26, respectively.

Regarding the first gas purity detection component 25 and the second gas purity detection component 26, the present application is not specifically limited, provided that the hydrogen content in oxygen and the oxygen content in hydrogen prepared by the water electrolysis hydrogen production system can be separately detected. In this embodiment, the first gas purity detection component 25 is a gas analyzer that includes an electrochemical sensing unit or a thermal conductivity sensing unit and is configured to detect trace hydrogen content in oxygen, and the second gas purity detection component 26 is a gas analyzer that includes an electrochemical sensing unit or a thermal conductivity sensing unit and is configured to detect trace oxygen content in hydrogen.

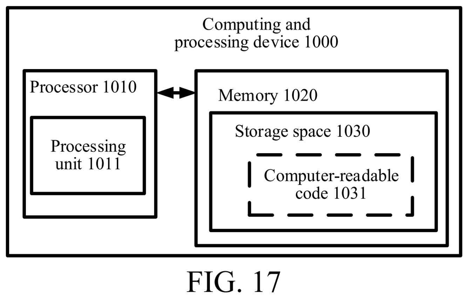

Referring to FIG. 17, the present application further provides a computing and processing device 1000, including a memory 1020 and one or more processors 1010. The memory 1020 has computer-readable code stored therein. When the computer-readable code is executed by the one or more processors 1010, the computing and processing device 1000 performs the method for controlling gas purity in a water electrolysis hydrogen production process in any foregoing embodiment.

The memory 1020 may include a volatile memory 1020 or a non-volatile memory 1020. Alternatively, the memory 1020 may include both a volatile memory 1020 and a non-volatile memory 1020. The non-volatile memory may be a read-only memory (ROM), a programmable ROM (PROM), an erasable PROM (EPROM), an electrically EPROM (EEPROM), or a flash memory. The volatile memory may be a RAM, a static RAM (SRAM), a dynamic RAM (DRAM), a synchronous DRAM (SDRAM), a double data rate SDRAM (DDRSDRAM), an enhanced SDRAM (ESDRAM), a synch link DRAM (SLDRAM), and a direct rambus RAM (DRRAM). The memory in the embodiments of the present application includes, but is not limited to, these and any other appropriate types of memories.

The memory 1020 has a storage space 1030 for computer-readable code 1031 configured to perform any method step in the foregoing method. The computer-readable code 1031 may be read from one or more computer program products or written into the one or more computer program products. These computer program products include program code carriers such as hard disks, compact discs (CDs), memory cards, or floppy disks.

The processor 1010 include one or more processing units 1011 in some embodiments. In some embodiments, the processor 1010 integrates an application processor and a modem processor. The application processor mainly processes operations involving an operating system, a user interface, an application, and the like. The modem processor mainly processes wireless communication signals, and is, for example, a baseband processor. The modem processor may either not be integrated into the processor 1010.

The present application further provides a computer program product, including computer-readable code, where when the computer-readable code is run on the computing and processing device 1000, the computing and processing device 1000 is caused to perform the method for controlling gas purity in a water electrolysis hydrogen production process in any foregoing embodiment. To avoid repetition, details are not described herein again.

The present application further provides a computer-readable storage medium, having a computer program stored therein, where the program, when executed by the processor 1010, implements the steps in the method in any foregoing embodiment. To avoid repetition, details are not described herein again.

The foregoing descriptions are merely specific implementations of the present application, but are not intended to limit the protection scope of the present application. Any variation or replacement readily figured out by a person skilled in the art within the technical scope disclosed in the present application shall fall within the protection scope of the present application. Therefore, the scope of protection of the present application shall be subject to the scope of protection of the claims.

## Claims

1. A water electrolysis hydrogen production system, wherein the system comprises an electrolyzer, a hydrogen gas-liquid separation unit, and an oxygen gas-liquid separation unit, wherein
a liquid outlet of the hydrogen gas-liquid separation unit is connected to a first pipeline, a liquid outlet of the oxygen gas-liquid separation unit is connected to a second pipeline, the first pipeline and the second pipeline converge and connect to one end of an alkali electrolyte return main pipeline, and the other end of the alkali electrolyte return main pipeline is connected to an oxygen-side pipeline and a hydrogen-side pipeline that are connected in parallel; the hydrogen-side pipeline is connected to a hydrogen-side flow channel inlet of the electrolyzer, and the oxygen-side pipeline is connected to an oxygen-side flow channel inlet of the electrolyzer; the hydrogen-side pipeline is provided with a first flow rate detection assembly and a first flow rate regulation assembly; and the oxygen-side pipeline is provided with a second flow rate detection assembly and a second flow rate regulation assembly; and
a hydrogen-side gas outlet of the electrolyzer is connected to the hydrogen gas-liquid separation unit, and an oxygen-side gas outlet of the electrolyzer is connected to the oxygen gas-liquid separation unit.

2. The water electrolysis hydrogen production system according to claim 1, wherein the system further comprises a control unit, the first flow rate detection assembly and the second flow rate detection assembly are respectively electrically coupled to the control unit, and the first flow rate regulation assembly and the second flow rate regulation assembly are respectively electrically coupled to the control unit.

3. The water electrolysis hydrogen production system according to claim 2, wherein the first flow rate regulation assembly comprises a first variable frequency pump, and the second flow rate regulation assembly comprises a second variable frequency pump.

4. The water electrolysis hydrogen production system according to claim 2, wherein an alkali electrolyte circulating pump is disposed on the alkali electrolyte return main pipeline, the first flow rate regulation assembly comprises a first regulating valve, and the second flow rate regulation assembly comprises a second regulating valve.

5. The water electrolysis hydrogen production system according to claim 2, wherein the system further comprises an alkali electrolyte cooler, and the alkali electrolyte cooler is disposed on the alkali electrolyte return main pipeline.

6. The water electrolysis hydrogen production system according to claim 1, wherein the hydrogen-side pipeline is further provided with a first control valve, and the first control valve is configured to control flow and shutoff of the hydrogen-side pipeline, and control unidirectional flow of liquid in the hydrogen-side pipeline; and the oxygen-side pipeline is further provided with a second control valve, and the second control valve is configured to control flow and shutoff of the oxygen-side pipeline, and control unidirectional flow of liquid in the oxygen-side pipeline.

7. The water electrolysis hydrogen production system according to claim 1, wherein the electrolyzer comprises an anode plate, a first cathode plate, and a second cathode plate, the anode plate is located in the middle of the electrolyzer, and the first cathode plate and the second cathode plate are respectively located at two ends of the electrolyzer.

8. The water electrolysis hydrogen production system according to claim 1, wherein the system comprises at least two electrolyzers, wherein
the hydrogen-side gas outlet of each electrolyzer is connected to a feed inlet of the hydrogen gas-liquid separation unit; and
the oxygen-side gas outlet of each electrolyzer is connected to a feed inlet of the oxygen gas-liquid separation unit.

9. The water electrolysis hydrogen production system according to any one of claims 1 to 8, wherein the system further comprises:
a gas purity detection assembly, wherein the gas purity detection assembly is electrically coupled to the control unit, and is capable of detecting hydrogen content in oxygen and oxygen content in hydrogen prepared by the water electrolysis hydrogen production system.

10. The water electrolysis hydrogen production system according to claim 1, wherein the electrolyzer comprises:
a tank, wherein a plurality of electrolytic cells are provided in the tank, each of the electrolytic cells comprises an anode region and a cathode region, a first electrode plate is provided in the tank, and a first cavity and a second cavity that are spaced apart are formed in the first electrode plate;
a first flow field structure, comprising a first electrolyte feed flow channel and a first electrolyte distribution channel that are provided in a wall of the tank, wherein the first electrolyte distribution channel is configured to communicate with the plurality of anode regions and communicate with the first electrolyte feed flow channel through the first cavity; and
a second flow field structure, comprising a second electrolyte feed flow channel and a second electrolyte distribution channel that are provided in the wall of the tank, wherein the second electrolyte distribution channel is configured to communicate with the plurality of cathode regions and communicate with the second electrolyte feed flow channel through the second cavity.

11. The water electrolysis hydrogen production system according to claim 10, wherein the electrolyzer further comprises a second electrode plate, the second electrode plate is symmetrically disposed on two sides of the first electrode plate in an extension direction of the tank and is spaced apart from the first electrode plate, and both a first inlet of the first electrolyte feed flow channel and a second inlet of the second electrolyte feed flow channel are provided on the second electrode plate.

12. The water electrolysis hydrogen production system according to claim 10, wherein the electrolyzer further comprises a second electrode plate, a plurality of first electrode plates are provided at equal intervals on a side of the second electrode plate in an extension direction of the tank, and both a first inlet of the first electrolyte feed flow channel and a second inlet of the second electrolyte feed flow channel are provided on the second electrode plate.

13. The water electrolysis hydrogen production system according to claim 10, wherein a plurality of first flow field structures and a plurality of second flow field structures are provided.

14. The water electrolysis hydrogen production system according to claim 13, wherein the plurality of first flow field structures and the plurality of second flow field structures are arranged alternately and at intervals in a circumferential direction of the tank.

15. The water electrolysis hydrogen production system according to claim 10, wherein the first cavity and the second cavity have the same volume.

16. A method for controlling gas purity in a water electrolysis hydrogen production process, wherein the method comprises:
acquiring hydrogen content in oxygen and oxygen content in hydrogen prepared by a hydrogen production system;
increasing an electrolyte flow rate at an oxygen-side flow channel inlet of an electrolyzer and/or decreasing an electrolyte flow rate at a hydrogen-side flow channel inlet of the electrolyzer when the hydrogen content in oxygen is greater than a first content value until the hydrogen content in oxygen is less than or equal to a first target value; and
increasing the electrolyte flow rate at the hydrogen-side flow channel inlet of the electrolyzer and/or decreasing the electrolyte flow rate at the oxygen-side flow channel inlet of the electrolyzer when the oxygen content in hydrogen is greater than a second content value until the oxygen content in hydrogen is less than or equal to a second target value.

17. The method according to claim 16, wherein
the increasing an electrolyte flow rate at an oxygen-side flow channel inlet of an electrolyzer and/or decreasing an electrolyte flow rate at a hydrogen-side flow channel inlet of the electrolyzer when the hydrogen content in oxygen is greater than a first content value until the hydrogen content in oxygen is less than or equal to a first target value is:
periodically increasing the electrolyte flow rate at the oxygen-side flow channel inlet of the electrolyzer to increase a first flow rate value and/or decreasing the electrolyte flow rate at the hydrogen-side flow channel inlet of the electrolyzer at intervals of a first time value to decrease a second flow rate value when the hydrogen content in oxygen is greater than the first content value until the hydrogen content in oxygen is less than or equal to the first target value; and/or
the increasing the electrolyte flow rate at the hydrogen-side flow channel inlet of the electrolyzer and/or decreasing the electrolyte flow rate at the oxygen-side flow channel inlet of the electrolyzer when the oxygen content in hydrogen is greater than a second content value until the oxygen content in hydrogen is less than or equal to a second target value is:
periodically increasing the electrolyte flow rate at the hydrogen-side flow channel inlet of the electrolyzer to increase a third flow rate value and/or decreasing the electrolyte flow rate at the oxygen-side flow channel inlet of the electrolyzer at intervals of a second time value to decrease a fourth flow rate value when the oxygen content in hydrogen is greater than the second content value until the oxygen content in hydrogen is less than or equal to the second target value.

18. The method according to claim 16, wherein
the first content value is a volume fraction ranging from 0.5% to 1.5%; and/or
the first time value ranges from 0.5 hours to 10 hours, and preferably ranges from 2 hours to 8 hours; and/or
the first flow rate value ranges from 0.5% to 1% of the electrolyte flow rate at the oxygen-side flow channel inlet before the current adjustment; and/or
the second flow rate value ranges from 0.5% to 1% of the electrolyte flow rate at the hydrogen-side flow channel inlet before the current adjustment; and/or
the first target value is a volume fraction ranging from 0.5% to 1.5%; and/or the second content value is a volume fraction ranging from 0.5% to 1.5%; and/or
the second time value ranges from 0.5 hours to 10 hours, and preferably ranges from 2 hours to 8 hours; and/or
the third flow rate value ranges from 0.5% to 1% of the electrolyte flow rate at the hydrogen-side flow channel inlet before the current adjustment; and/or
the fourth flow rate value ranges from 0.5% to 1% of the electrolyte flow rate at the oxygen-side flow channel inlet before the current adjustment; and/or
the second target value is a volume fraction ranging from 0.5% to 1.5%.

19. An apparatus for controlling gas purity in a water electrolysis hydrogen production system, comprising:
a controller unit, configured to determine a regulation value for an electrolyte flow rate at an oxygen-side flow channel inlet and an electrolyte flow rate at a hydrogen-side flow channel inlet of an electrolyzer based on hydrogen content in oxygen and oxygen content in hydrogen prepared by the water electrolysis hydrogen production system and the electrolyte flow rate at the oxygen-side flow channel inlet and the electrolyte flow rate at the hydrogen-side flow channel inlet of the electrolyzer;
a gas purity detection assembly, wherein the gas purity detection assembly is electrically coupled to the controller unit, and is configured to detect the hydrogen content in oxygen and the oxygen content in hydrogen prepared by the water electrolysis hydrogen production system;
a flow rate detection assembly, wherein the flow rate detection assembly is electrically coupled to the controller unit, and is configured to detect the electrolyte flow rate at the oxygen-side flow channel inlet and the electrolyte flow rate at the hydrogen-side flow channel inlet of the electrolyzer; and
a flow rate regulation assembly, wherein the flow rate regulation assembly is electrically coupled to the controller unit, and is configured to regulate the electrolyte flow rate at the oxygen-side flow channel inlet and the electrolyte flow rate at the hydrogen-side flow channel inlet of the electrolyzer.

20. A computing and processing device, comprising:
a memory, having computer-readable code stored therein; and
one or more processors, wherein when the computer-readable code is executed by the one or more processors, the computing and processing device performs the method for controlling gas purity in a water electrolysis hydrogen production process according to any one of claims 16 to 18.

21. A computer program product, comprising computer-readable code, wherein when the computer-readable code is run on a computing and processing device, the computing and processing device is caused to perform the method for controlling gas purity in a water electrolysis hydrogen production process according to any one of claims 16 to 18.

22. A computer-readable storage medium, having a computer program stored therein, wherein the program, when executed by a processor, implements the steps in the method according to any one of claims 16 to 18.
